# EUROPEAN PATENT SPECIFICATION

(11) **EP 2 031 292 B1**
(45) Date of publication and mention of the grant of the patent: **03.11.2010**
(21) Application number: 07425550.6
(22) Date of filing: 31.08.2007
(51) Int. Cl.: F16L 55/054, F16L 55/033, E03C 1/04

(54) **Anti-noise unit for hydraulic systems**
Schalldämpfendes Bauteil für Hydrauliksysteme
Elément d'amortissement du bruit pour des systèmes hydrauliques

(43) Date of publication of application: 04.03.2009
(73) Proprietor: Righi S.p.A., 28011 Armeno (No) (IT)
(72) Inventor: Farace, Enzo, 28011 Armeno (IT)
(74) Representative: Valentini, Giuliano

(56) References cited:
- EP-A- 0 846 909
- EP-A- 1 640 514
- WO-A-94/13997
- DE-A1- 2 902 409
- DE-A1- 3 034 109
- DE-A1- 3 314 860
- FR-A- 2 374 581

## Description

The present invention concerns a unit for attenuating water flow noise in hydraulic systems and, in particular, an anti-noise unit for installation in the pipeline supplying a faucet, a valve or a mixer tap.

In many countries, there are laws that establish the noise threshold for water and sanitary systems with faucets for the supply of the water; this noise can be caused, for example, by the turbulence that is generated in the pipes during water delivery, as well as by suddenly closing the tap, which can cause a phenomenon called water hammer and is becoming more and more frequent because of the widespread use of mixer taps, for which a rather short stroke is sufficient to take the control lever from the fully open to the closed position. In the same way, the particular shape of the mixer tap and/or cartridge inside it can be sources of noise.

International patent application no. WO-9413997 and European patent application no. EP-0846909 both describe an anti-noise unit consisting of an element made of elastic material having the shape of a substantially cylindrical pipe, and equipped with flanges on both ends. The elastic element is fitted in a rigid supporting frame that includes two ring-shaped portions at the ends linked by a plurality of longitudinal columns. When assembled, the inner surfaces of the flanges on the elastic element rest on the outer surfaces of the respective ring-shaped portions of the supporting frame.

These devices are installed immediately upstream of the tap, for example by inserting them in the connecting joint between the water feed pipes and the tap to which they are connected. During use, the deformation of the elastic element allows to absorb any turbulence in the water flow and the sudden increases of pressure caused by rapid closure of the faucet. The openings in the frame of the rigid support between the longitudinal columns allow the elastic element to expand beyond the inner diameter of the rigid supporting frame. DE 3314860 and DE 2902409 both describe an anti-noise unit according to the preamble of claim 1. The projections provided on the supporting frame extend continuously along the circumference of the outer surfaces of the ring shaped portions. Once mounted, these projections provide a locking interference fit against forces acting in the radial direction but do not prevent the mutual rotation of the elastic element with respect to the supporting frame during installation.

The rather widespread use of these devices has raised a series of problems that affect the durability and effectiveness of these known devices.

One of the main problems of the known devices is basically caused by errors that may occur during installation. Specifically, during tightening of the joints in which the device is incorporated, the elastic element may rotate in the vicinity of just one of the flanges, with respect to the supporting frame. This applies a torsion to the elastic element with consequent deformation of the cylindrical pipe portion of the elastic element.

When this type of error occurs during installation, the material of the elastic element is subject to a twisting preload even under conditions of normal operation, which endangers the durability of the elastic element in time. Moreover, not only the damping effect of the device is reduced, but the elastic element deformed in this way may generate turbulence in the normal flow itself, and thus actually become a source of noise.

An object of the present invention is to propose an anti-noise unit for hydraulic systems that is not susceptible to errors during installation.

Another object of the present invention is to propose an anti-noise unit for hydraulic systems that has a longer life than the known types of anti-noise devices.

These objects are achieved by the invention thanks to an anti-noise unit according to claim 1.

By preventing the rotation of the flanges on the elastic element with respect to the ring-shaped portions of the rigid supporting frame, torsion of the elastic element during tightening of the joints is avoided, thus ensuring correct assembly of the anti-noise unit.

The means to prevent the relative slipping along the surfaces are made in the form of a plurality of discrete elements protruding from the outer surfaces of the ring-shaped portions of the supporting frame.

The means to prevent the relative slipping along the surfaces can include elements protruding from the outer surfaces of the ring-shaped portions and corresponding hollows on the inner surface of the flanges.

In a possible embodiment of the present invention, the protruding elements and hollows have spherical form and shape such as, for example, the shape of a hemisphere.

According to an advantageous aspect of the present invention, the rigid supporting frame includes one or more surfaces with rounded edges facing inward towards the inner space in which the element made of elastic material is housed.

In particular, at least the longitudinal columns include surfaces with rounded edges facing inward towards the inner space in which the element made of elastic material is housed.

The surfaces facing inward towards the space in which the element made of elastic material is housed are preferably mirror-finished surfaces.

This will prevent damage to the elastic element during the frequent expansion stresses to which it is subject during use.

From comparative tests made with known devices and the anti-noise units that are the subject of the present invention, it was found that an anti-noise unit produced according to the present invention is 4-5 times more durable than the known type of devices.

Additional advantageous features of the present invention will become more apparent from the following description, made by way of example and with no limiting purpose, with reference to the schematic drawings enclosed wherein:
- Figure 1 is a perspective view of an anti-noise unit according to a possible embodiment of the present invention;
- Figure 2 is a perspective view of an unassembled condition of the anti-noise unit shown in Figure 1;
- Figure 3 is an elevation view of the rigid supporting frame of the anti-noise unit shown in Figure 1;
- Figure 4 is a cross section view of the rigid supporting frame from plane IV-IV of Figure 3; and
- Figure 5 is an axial section view of the anti-noise unit shown in Figure 1.

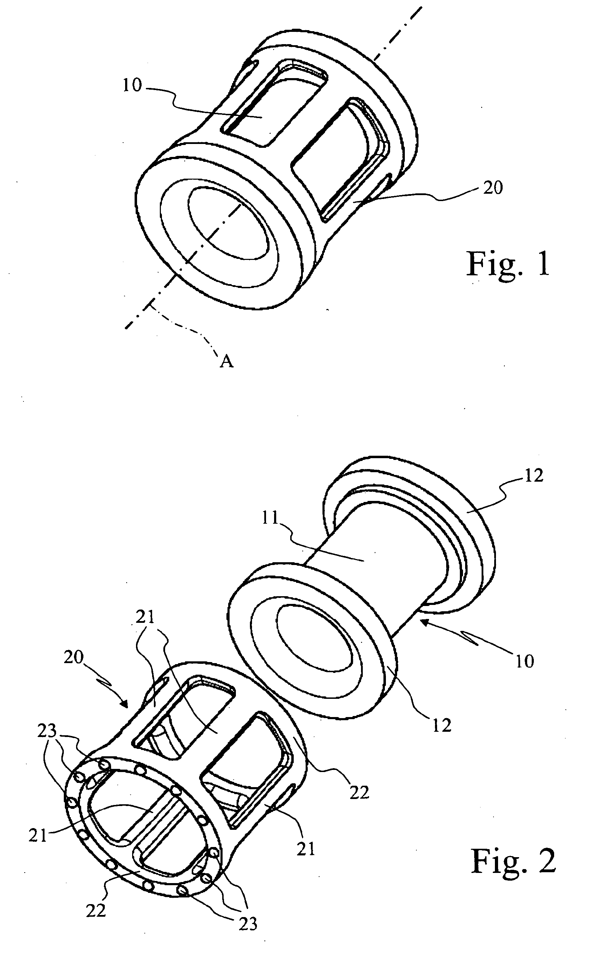

The anti-noise unit for hydraulic systems shown in Figures 1 and 2 comprises an element 10 made of elastic material having the shape of a tubular, substantially cylindrical pipe 11 and equipped with flanges 12 at both their ends. The elastic element 10 can be made of a material like rubber, silicone or similar material, in various types of composition and hardness.

The elastic element 10 is inserted in a rigid supporting frame 20 that includes two ring-shaped end portions 22 connected by a plurality of longitudinal columns 21. The supporting frame 20 can be made, for example, of plastic, ceramic material, metallic materials such as aluminum, brass, steel or, in any case, materials with the desired characteristics of rigidity.

When assembled (Figure 1), the elastic element 10 fits inside the supporting frame 20 with the inner surfaces of the flanges 12 resting on the outer surfaces of the respective ring-shaped portions 22 of the supporting frame 20. The anti-noise unit advantageously includes means to prevent the relative slipping between the inner surfaces of the flanges 12 and the outer surfaces of the ring-shaped portions 22 placed in mutual contact.

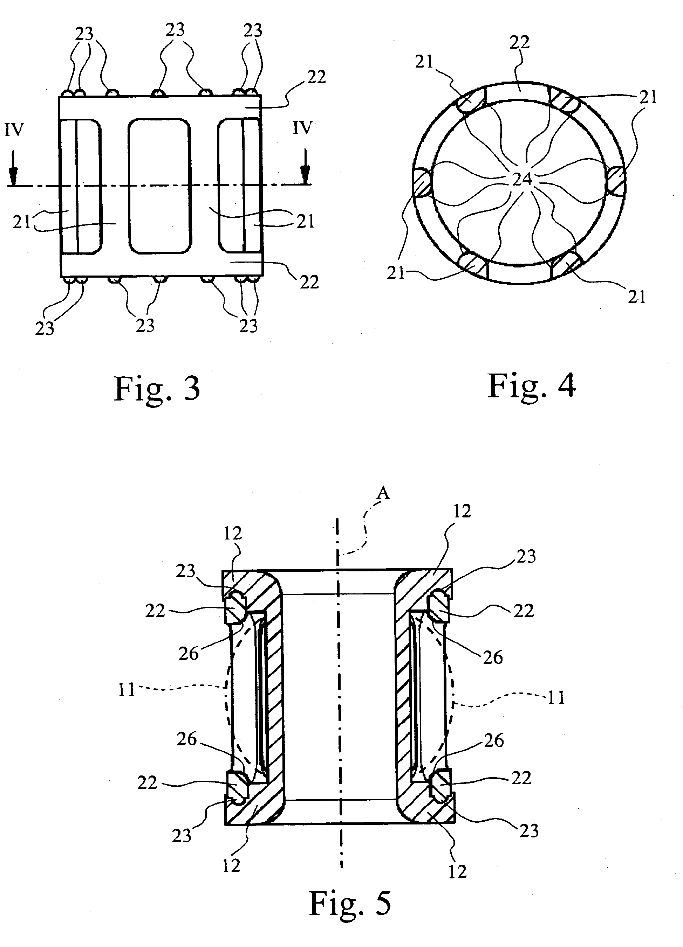

In the embodiment shown here by way of example, the means to prevent the relative slipping between the surfaces in mutual contact include the projecting elements 23 on the outer surface of the ring-shaped portions 22. From the elevation view in Figure 3 it can be seen that the projecting elements 23 are found on both the ring-shaped portions 22 and are spherical in cross section, for example having the shape of a hemisphere.

Figure 4 illustrates another characteristic peculiar to the anti-noise unit according to the present invention. The cross section view highlights the fact that at least the longitudinal columns 21 include surfaces with rounded edges 24 facing inward towards the space in which the elastic element 10 is housed. The outer surface of the cylindrical pipe 11 presses against these edges during its expansion (dotted line in Figure 5) caused by the absorption of pressure variations along the pipes in which the anti-noise unit according to the present invention is installed.

This does not imply, however, that other surfaces of the supporting frame 20 cannot also have advantageously rounded edges facing towards the inside in which the elastic element 10 is housed. For example, as can be clearly seen in the axial view of Figure 5, the ring-shaped portions 22 of the supporting frame 20 also have rounded surfaces facing inward rather than sharp edges that could damage the elastic element 10 during the expansion of the cylindrical pipe 11 in case of particularly pronounced expansion.

The surfaces facing inward towards the inside of the supporting frame are preferably mirror-finished. If the supporting frame 20 is made of a plastic material, the mirror-finished surfaces can be obtained during production by using lapped dies. This will prevent, or at least further reduce, wear by friction of portions of the elastic element 10 which press against the inner surfaces of the supporting frame 20 during use.

In the view of Figure 5 it is also possible to observe how the projecting elements 23 fit against the inner surfaces of the flanges 12 so as to prevent any twisting motion between each of the flanges 12 and the respective ring-shaped portions 22 on which they rest.

In practice, each projection 23 elastically deforms the portion of the flange 12 and partially penetrates inside it in such a way as to prevent any slipping between the contact surfaces and prevent twisting and applying a torsion preload to the cylindrical pipe 11. The hemispherical shape of the protruding elements 23 also permits elastic deformation of the flanges 12 without damaging the elastic material.

Various changes can be made with respect to the embodiment shown here without departing from the concept of the present invention.

For example, the means to prevent the relative slipping between the surfaces can include protruding elements on the outer surfaces of the ring-shaped portions 22 and matching hollows of complementary shape made on the inner surfaces of the flanges 12.

In the same way, the protruding elements and/or hollows can also have different shapes from that of the spherical cross-section and, like the longitudinal columns 21 of the supporting frame, can be produced in a different number from that shown here by way of example.

## Claims

1. An anti-noise unit for hydraulic systems, including at least one element (10) made of elastic material having the shape of a substantially cylindrical pipe (11) equipped with flanges (12) on both ends, and at least one supporting frame (20) made of rigid material that includes two ring-shaped end portions (22) connected by a plurality of longitudinal columns (21), wherein said element (10) made of elastic material fits inside said supporting frame (20) with the inner surfaces of the flanges (12) resting on the outer surfaces of the respective ring-shaped portions (22) of said supporting frame (20), wherein means are provided to prevent the relative slipping between the inner surfaces of the flanges (12) and the outer surfaces of the ring-shaped portions (22) placed in mutual contact, **characterized in that** said means to prevent the relative slipping between said surfaces include a plurality of discrete projecting elements (23) on the outer surfaces of said ring-shaped portions (22).

2. An anti-noise unit according to claim 1, wherein said means to prevent the relative slipping between said surfaces include projecting elements (23) on the outer surfaces of said ring-shaped portions (22) and corresponding hollows of a complementary shape made on the inner surfaces of said flanges (12).

3. An anti-noise unit according to claim 2, wherein said projecting elements (23) and said hollows have a spherical cross section.

4. An anti-noise unit according to claim 2, wherein said projecting elements (23) and said hollows have a hemispherical shape.

5. An anti-noise unit according to claim 1, wherein said supporting frame (20) includes one or more surfaces with rounded edges facing inward towards the space wherein said elastic element (10) is housed.

6. An anti-noise unit according to claim 1, wherein at least said longitudinal columns (21) include surfaces with rounded edges facing inward towards the space where said elastic element (10) is housed.

7. An anti-noise unit according to claim 1, wherein one or more surfaces of said supporting frame (20) facing inward towards the space where said elastic element (10) is housed have mirror-finished surfaces.

## Patentansprüche

1. Einrichtung zur Geräuschunterdrückung für hydraulische Systeme, wenigstens ein aus einem elastischen Material hergestelltes Element (10), das die Form eines im Wesentlichen zylindrischen Rohrs (11) mit an beiden Enden vorgesehenen Flanschen (12) aufweist, und wenigstens einen aus einem starren Material hergestellten Stützrahmen (20) umfassend, wobei der Stützrahmen (20) zwei ringförmige Endabschnitte (22) umfasst, die über eine Vielzahl an länglichen Streben (21) miteinander verbunden sind, und das aus dem elastischen Material hergestellte Element (10) mit den inneren Oberflächen der Flansche (12) auf den äußeren Oberflächen der entsprechenden ringförmigen Abschnitte (22) des Stützrahmens (20) aufliegend in den Stützrahmen (20) eingepasst ist, wobei Mittel vorgesehen sind, um ein relatives Gleiten zwischen den in gegenseitigen Kontakt gebrachten inneren Oberflächen der Flansche (12) und äußeren Oberflächen der ringförmigen Abschnitte (22) zu verhindern, **dadurch gekennzeichnet, dass** die Mittel zum Verhindern des relativen Gleitens zwischen den Oberflächen eine Vielzahl an einzelnen vorstehenden Elementen (23) auf den äußeren Oberflächen der ringförmigen Abschnitte (22) umfassen.

2. Einrichtung zur Geräuschunterdrückung nach Anspruch 1, wobei die Mittel zum Verhindern des relativen Gleitens zwischen den Oberflächen vorstehende Elemente (23) auf den äußeren Oberflächen der ringförmigen Abschnitte (22) und entsprechende Aushebungen mit einer komplementären Form auf den inneren Oberflächen der Flansche (12) umfassen.

3. Einrichtung zur Geräuschunterdrückung nach Anspruch 2, wobei die vorstehenden Elemente (23) und die Aushebungen einen sphärischen Querschnitt haben.

4. Einrichtung zur Geräuschunterdrückung nach Anspruch 2, wobei die vorstehenden Elemente (23) und die Aushebungen eine hemisphärische Form haben.

5. Einrichtung zur Geräuschunterdrückung nach Anspruch 1, wobei der Stützrahmen (20) eine oder mehrere Oberflächen mit abgerundeten Kanten umfasst, die nach innen in Richtung des Raumes, in dem das elastische Element (10) untergebracht ist, ausgerichtet sind.

6. Einrichtung zur Geräuschunterdrückung nach Anspruch 1, wobei wenigstens die Längsstreben (21) Oberflächen mit abgerundeten Kanten umfassen, die nach innen in Richtung des Raumes, in dem das elastische Element (10) untergebracht ist, ausgerichtet sind.

7. Einrichtung zur Geräuschunterdrückung nach Anspruch 1, wobei eine oder mehrere Oberflächen des Stützrahmens (20), die nach innen in Richtung des Raumes, in dem das elastische Element (10) untergebracht ist, ausgerichtet sind, hochglanzpolierte Oberflächen aufweisen.

## Revendications

1. Unité antibruit pour systèmes hydrauliques, comprenant au moins un élément (10) fait de matériau élastique présentant la forme d'un tuyau sensiblement cylindrique (11) équipé de brides (12) sur les deux extrémités, et au moins un cadre de support (20) fait de matériau rigide qui comprend deux parties d'extrémité annulaires (22) reliées par une pluralité de colonnes longitudinales (21), dans lequel ledit élément (10) fait de matériau élastique se loge à l'intérieur dudit cadre de support (20) avec les surfaces intérieures des brides (12) reposant sur les surfaces extérieures des parties annulaires respectives (22) dudit cadre de support (20), dans lequel des moyens sont prévus pour empêcher le glissement relatif entre les surfaces intérieures des brides (12) et les surfaces extérieures des parties annulaires (22) placées en contact mutuel, **caractérisé en ce que** lesdits moyens pour empêcher le glissement relatif entre lesdites surfaces comprennent une pluralité d'éléments saillants distincts (23) sur les surfaces extérieures desdites parties annulaires (22).

2. Unité antibruit selon la revendication 1, dans lequel lesdits moyens pour empêcher le glissement relatif entre lesdites surfaces comprennent des éléments saillants (23) sur les surfaces extérieures desdites parties annulaires (22) et des creux correspondants de forme complémentaire faits sur les surfaces intérieures desdites brides (12).

3. Unité antibruit selon la revendication 2, dans lequel lesdits éléments saillants (23) et lesdits creux possèdent une section transversale sphérique.

4. Unité antibruit selon la revendication 2, dans lequel lesdits éléments saillants (23) et lesdits creux possèdent une forme hémisphérique.

5. Unité antibruit selon la revendication 1, dans lequel ledit cadre de support (20) comprend une ou plusieurs surfaces avec des bords arrondis, tournées vers l'intérieur vers l'espace dans lequel ledit élément élastique (10) est logé.

6. Unité antibruit selon la revendication 1, dans lequel au moins lesdites colonnes longitudinales (21) comprennent des surfaces avec des bords arrondis, tournées vers l'intérieur vers l'espace où ledit élément élastique (10) est logé.

7. Unité antibruit selon la revendication 1, dans lequel une ou plusieurs surfaces dudit cadre de support (20), tournées vers l'intérieur vers l'espace où ledit élément élastique (10) est logé, possèdent des surfaces à finition miroir.
